# EUROPEAN PATENT APPLICATION

(11) **EP 4 079 772 A1**
(43) Date of publication of application: **26.10.2022**
(21) Application number: 20902707.7
(22) Date of filing: 18.12.2020
(51) Int. Cl.: C08F 20/56, C08F 2/44

(54) **PRODUCTION METHOD FOR POLYMER COMPOSITION**

(30) Priority: 20.12.2019 JP 2019230500
(71) Applicant: Showa Denko K.K., Tokyo 105-8518 (JP)
(72) Inventor: MIYAMURA Yasunao, Tokyo 105-8518 (JP); KADOWAKI Yasushi, Tokyo 105-8518 (JP); YAMATAKE Kuniaki, Tokyo 105-8518 (JP); HARA Masanao, Tokyo 105-8518 (JP); YAMAKI Shigeru, Tokyo 105-8518 (JP); OHATA Hideki, Tokyo 105-8518 (JP)
(74) Representative: Strehl Schübel-Hopf & Partner
(86) International application number: PCT/JP2020/047507
(87) International publication number: WO 2021/125341

(57) **Abstract**

The present invention provides a production method of a polymerized polymer containing a silver nanowire, including a preparation step of preparing a monomer composition containing the silver nanowire, a polymerization step of performing polymerization of the monomer composition containing the silver nanowire, and a standing step of leaving the monomer composition to stand which is performed between the preparation step and the polymerization step, in which a start of the polymerization step is determined in the standing step based on an orientation state in a vertical direction of the silver nanowire in the monomer composition as an index.

## Description

### [Technical Field]

The present invention relates to a production method for a polymer composition.

Priority is claimed on Japanese Patent Application No. 2019-230500, filed in Japan on December 20, 2019, the content of which is incorporated herein by reference.

### [Background Art]

Silver nanowires are kneaded, dispersed or the like in a material such as a resin or a gel and used in optical materials represented by, for example, transparent touch panels and the like. As a characteristic that determines the properties of these optical materials and the like, the orientations of silver nanowires can be considered. Specific examples of the properties of the optical materials and the like include properties such as mechanical strength, elongation strength, optical anisotropy, birefringence, conductive anisotropy and electrothermal anisotropy.

As a production method for a resin or gel containing an oriented nanowire, a method is known in which spray coating, shear stress or the like is used.

For example, in Non-Patent document 1, an oriented nanowire film is produced by controlling the spray direction with respect to a base material provided with unevenness.

In addition, in Non-Patent document 2, an oriented nanowire film is produced using an orientation caused by shear stress during bar coating.

### [Citation List]

### [Patent Document]

[Patent Document 1]
Japanese Unexamined Patent Application, First Publication No. 2019-168386

### [Non Patent document]

[Non Patent Document 1]
   Probst, P. T. et al. ACS Applied Materials & Interfaces 10, 2018, 3046-3057
[Non Patent Document 2]
   Byoungchoo Park et al. Scientific Reports volume 6, 2016, Article number: 19485

### [Summary of Invention]

### [Technical Problem]

In the method disclosed in Non-Patent document 1 or 2, the orientation of the nanowire depends on the spray direction or the bar coating direction. Therefore, the orientation direction is limited. In Patent document 1, only a method for measuring the orientation is described.

A first aspect of the present invention has been made in consideration of the above-described circumstances, and an objective of the first aspect of the present invention is to provide a production method of a polymerized polymer containing a silver nanowire in which the orientation direction or orientation degree of the silver nanowire can be freely controlled.

### [Solution to Problem]

That is, a first aspect of the present invention includes configurations described below.
[1] A production method of a polymerized polymer containing a silver nanowire, including a preparation step of preparing a monomer composition containing the silver nanowire, a polymerization step of performing polymerization of the monomer composition containing the silver nanowire, and a standing step of leaving the monomer composition to stand, which is performed between the preparation step and the polymerization step, in which a start of the polymerization step is determined in the standing step based on an orientation state in a vertical direction of the silver nanowire in the monomer composition as an index.
   The first aspect of the present invention preferably includes the following characteristics [2] to [8]. Two or more of these characteristics can be preferably combined together.
[2] The production method of a polymerized polymer according to [1], in which the polymerization step starts after the silver nanowire in the monomer composition is oriented in the vertical direction in the standing step.
[3] The production method of a polymerized polymer according to [1] or [2], in which the polymerized polymer has a sheet shape.
[4] The production method of a polymerized polymer according to [1] or [2], in which the polymerized polymer is a gel.
[5] The production method of a polymerized polymer according to [1] or [2], in which the standing step includes a sub step of confirming an orientation of the silver nanowire.
[6] The production method of a polymerized polymer according to [5], in which the sub step is a step in which the monomer composition is disposed between an optical source and a polarization filter, and the polarization filter is rotated around an optical axis generated from the optical source as an axis to perform observation.
[7] The production method of a polymerized polymer according to [5], in which the sub step is a step in which two polarization filters that are disposed in a crossed Nicols shape at all times are provided in front of an optical source, the monomer composition is disposed between the two polarization filters, and the polarization filters are rotated around an optical axis generated from the optical source as an axis to perform observation.
[8] The production method of a polymerized polymer according to [7], in which the sub step is a step in which a sensitive color plate is disposed between any one of the two polarization filters and the monomer composition.

### [Advantageous Effects of Invention]

It is possible to freely control the orientation direction or orientation degree of a silver nanowire in a polymerized polymer containing the silver nanowire.

### [Brief Description of Drawings]

Fig. 1 is a schematic view schematically showing an example of a method of measuring an orientation of the present embodiment, and an arrow in the drawing is a direction of light generated from an optical source and indicates an optical axis direction.
Fig. 2 is a schematic view schematically showing another example of the method of measuring the orientation of the present embodiment, and an arrow in the drawing is a direction of light generated from an optical source and indicates an optical axis direction.

### [Description of Embodiment]

Hereinafter, a preferable example of an embodiment of the present invention will be described, but the present invention can be appropriately modified and performed within the scope of the gist.

The present embodiment is simply a specific description for better understanding of the gist of the invention and does not limit the present invention unless particularly otherwise specified. Positions, angles, numbers, material, amounts, configurations and the like can be modified, added, omitted, substituted and the like within the scope of the gist of the present invention.

### (Production method of polymerized polymer)

A production method of a polymerized polymer of the present embodiment includes a polymerization step of polymerizing a monomer composition containing a silver nanowire, and a standing step of leaving the monomer composition to stand immediately before the polymerization step, in which the start of the polymerization step is determined based on the orientation state of the silver nanowire in the vertical direction in the monomer composition in the standing step as an index.

The standing step may include a sub step of confirming an orientation of the silver nanowire. Examples of the sub step include the following sub steps A to D, and the sub step may be any of those.

Sub step A: A step in which the monomer composition is disposed between an optical source and a polarization filter, and the polarization filter is rotated around an optical axis generated from the optical source as an axis to perform observation.

Sub step B: A step in which the monomer composition is disposed between two polarization filters that are disposed in a crossed Nicols shape at all times, and the two polarization filters are rotated around an optical axis generated from an optical source as an axis to perform observation.

Sub step C: A step in which, the monomer composition and polarization filters are disposed similar to the sub step B, a sensitive color plate is further disposed between the monomer composition and any of the two polarization filters, and the two polarization filters are rotated as a unit with the sensitive color plate to perform observation.

Sub step D: A step of measuring the monomer composition by small-angle X-ray scattering (SAXS) (a measurement method described in Patent document 1 can be considered as a preferable example. Regarding the measurement method or conditions, the description in the document 1 may be referred to.).

In the sub step described above, the polarization filter(s) and the measurement sample (monomer composition) may be disposed parallel to each other. In addition, the polarization filter, the sensitive color plate and the measurement sample may be disposed parallel to one another. In addition, the polarization filter, the sensitive color plate and the measurement sample may have a plate-like shape. The plate or sample having the plate shape may be disposed such that the main surface thereof becomes perpendicular to the optical axis generated from the optical source.

In a case where the monomer composition before polymerization is a liquid phase or the like, the monomer composition may be left to stand in a container that is selected as necessary and may be observed as it is. The monomer composition may be polymerized while contained in the container. Examples of the container include containers formed of a transparent material such as silica or glass, but the container is not limited to these examples. The form of the container can be arbitrarily selected, and examples thereof include a box form, a cell form and the like, but the form of the container is not limited to these examples.

Although the reason is not clear, silver nanowires in a state of being dispersed in a liquid such as an aqueous solution or an organic solvent exhibit a property of being oriented in the vertical direction (the direction of gravitational force) when left to stand. Therefore, in order to obtain a target polymerized polymer, the curing of the polymer needs to be performed by disposing the polymer such that the orientation direction of the silver nanowire becomes the vertical direction. That is, the orientation direction of the silver nanowire can be freely changed with respect to the shape of a polymerized polymer to be obtained by changing the disposition of the polymer as necessary.

The silver nanowire may be formed of silver alone. In addition, the size of the silver nanowire can be arbitrarily selected, and, for example, the silver nanowire may be 20 to 28 nm in diameter and 12 to 16 µm in length.

After the monomer composition containing the silver nanowire is prepared and left to stand, the orientation of the silver nanowire in the obtained polymerized polymer can be measured by an ordinary method such as observation of a section thereof with a microscope. This may be considered as the step of confirming the orientation of the silver nanowire. As long as the silver nanowire is oriented in the polymerized polymer which is obtained by polymerization in the present embodiment, the silver nanowire can be considered to be already oriented in the monomer composition at the time of the end of the standing step before polymerization. The confirmation step may be a step in which, as described below, the monomer composition is disposed between an optical source and a polarization filter, and the polarization filter is rotated around an optical axis generated from the optical source as an axis, that is, the optical axis of light incident from the optical source as an axis, to perform observation. From the viewpoint of ease of observation, the confirmation step may be preferably a step in which the monomer composition is disposed between two polarization filters that are disposed in a crossed Nicols shape at all times, and the two polarization filters are rotated around an optical axis generated from an optical source as an axis to perform observation. In addition, more preferably, a sensitive color plate may be disposed between the monomer composition and any of the two polarization filters that are disposed in a crossed Nicols shape. In the case of being observed only with the two polarization filters in a crossed Nicols state, light beams are blocked, and the monomer composition is observed in the darkness. In addition, the sensitive color plate is a plate that has a fast axis direction and a slow axis direction and exhibits a bright color as an interference color in the case of being disposed between two polarization filters which are combined together in orthogonal positions. When the phase difference changes even slightly, the interference color sensitively changes. In addition, a step of mixing the silver nanowire, a monomer and a component that is added as necessary may be provided before the preparation of the monomer composition.

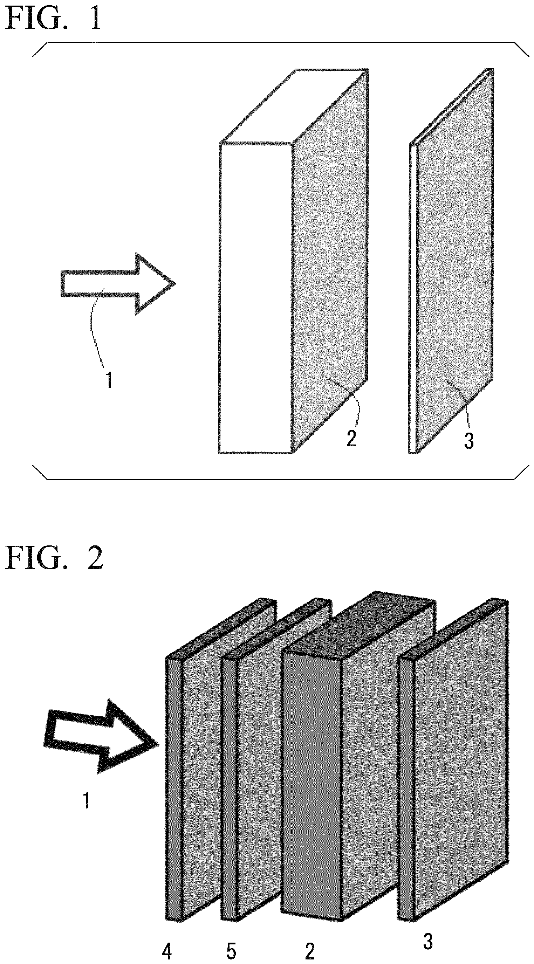

When the monomer composition containing the silver nanowire is prepared and the obtained monomer composition or polymerized polymer is transparent, the orientation of the silver nanowire in the monomer composition or the polymerized polymer can be measured using polarization. As a specific example, for example, the above-described sub step A can be exemplified. In this case, for example, as shown in Fig. 1, the transparent monomer composition before polymerization or the transparent polymerized polymer after polymerization is disposed as a measurement sample 2 and observed by passing light 1 generated from an optical source through the measurement sample 2 and a polarization filter 3. At this time, the polarization filter 3 is rotated around the optical axis as an axis. In addition, a direction which is parallel to the polarization axis of the polarization filter 3, which is obtained when the light becomes darkest, is determined as the orientation direction of the silver nanowire. The polarization filter only transmits light which is polarized in a specific direction and is thus suitably used for the above-described determination.

As another specific example, for example, the above-described sub step C can be exemplified. In this case, for example, as shown in Fig. 2, an insertable and detachable sensitive color plate (phase difference plate) 5 having a phase difference of 530 to 580 nm is installed between two polarization filters 3 and 4 which form a crossed Nicols shape at all times such that the slow axis of the sensitive color plate forms angles of 45° with the polarization axes of the polarization filters. In addition, the transparent monomer composition before polymerization or the transparent polymerized polymer after polymerization is disposed as a measurement sample 2 between the sensitive color plate 5 and any one of the polarization filters 3 or 4. In addition, the sensitive color plate 5 is rotated as a unit with the polarization filters 3 and 4 at the same time around the optical axis generated from the optical source as an axis, and the measurement sample 2 is observed. The crossed Nicols shape means disposition where the polarization axes of the two polarization filters are orthogonal to each other. In this step, in the beginning, the measurement sample 2 may be observed only with the polarization filters 3 and 4 without the sensitive color plate (corresponding to the sub step B), and then the polarization filters 3 and 4 may be rotated around the optical axis as an axis. Then, in a case where the silver nanowire is in an oriented state, light and dark are repeated at 45° intervals. A direction parallel or perpendicular to the polarization axis of the polarization filter 3, which is confirmed when the light becomes darkest, is determined as the orientation direction of the silver nanowire. Furthermore, in order to determine whether the orientation direction is parallel or perpendicular, the sensitive color plate 5 is inserted and rotated with the polarization filters 3 and 4 as described above. The orientation direction of the silver nanowire can be determined as a direction which is perpendicular to the slow axis of the sensitive color plate 5, which is confirmed when the wavelength of the transmitted light, which provides maximum transmission in the visible range, becomes the longest wavelength, in other words, as a typical example, when the transmitted light becomes a color in a blue-green to green to yellow-green range. The sensitive color plate sensitively reacts as a color even to a minute orientation degree and is thus suitably used in the above-described determination.

The expression "the composition or the polymer is transparent" means that the composition or the polymer is a material that transmits light sufficiently enough to be measured with a measuring system of the present embodiment. The measurement sample 2 and the polarization filter 3 may be disposed parallel to each other.

In the standing step, the orientation state of the monomer composition containing the silver nanowire may be observed by performing the confirmation step once or more at certain time intervals. The intervals may be arbitrarily set, and examples thereof include three minutes, five minutes, 10 minutes, 15 minutes, 30 minutes, one hour and the like. The number of times of observation can be arbitrarily selected, and examples thereof include once to 10 times, once to five times, one to three times, and the like. It is preferable that the observation be stopped when a desired state is observed and the process move to the polymerization step.

In the above-described state, in the case of using the sub step A, light that is observed becomes darker as the orientation degree of the silver nanowire becomes higher, and, in the case of using the sub step B, the light and dark difference becomes larger every 45° rotation as the orientation degree of the silver nanowire becomes higher. Therefore, the light and dark degree can be also used to determine the orientation degree. In addition, in the case of using the sub step C, the color change becomes large when the orientation degree of the silver nanowire is high. In the case of using the sub step D, when the orientation degree of the silver nanowire is high, the orientation function S value (that is, the value of the orientation function S at the time of uniaxial orientation approximation described in Patent document 1) to be obtained becomes large and approximates to one. In the sub step D, the orientation of the silver nanowire can be obtained from scattering vector data obtained by measuring the measurement material by small-angle X-ray scattering.

Regarding light and dark or color that is obtained by observation as in the sub steps A to C, it is preferable to produce calibration curves using samples for which the orientation degree has already been clarified. In addition, the light and dark or the color may be determined with the naked eye, but is preferably measured with a photometer or a chromometer in order to obtain higher accuracy. When the silver nanowire is measured using the sub step D, high orientation degree may mean that the orientation function S value thereof is 0.2 or more.

The orientation direction to be confirmed is a direction on a plane perpendicular to the optical axis. In order to confirm a three-dimensional orientation direction in the measurement sample 2, the orientation direction can be obtained by observing a sample in different directions, preferably, directions that are different by 90° from each other.

In the sub step A, the measurement sample 2 and the polarization filter 3 shown in Fig. 1 may be switched, and, even in this case, the same results can be obtained.

In the sub step C, the orientation direction may be measured by a sensitive color plate method having a higher sensitivity as shown in Fig. 2. The positions of the measurement sample 2 and the sensitive color plate 5 in Fig. 2 may be switched, and, even in this case, the same results can be obtained.

In order to obtain a higher orientation degree, it is preferable to further extend the time of the standing step. However, when the time is too long, the production efficiency decreases. Therefore, the time of the standing step may be selected based on a period of time wherein the orientation degree no longer becomes higher even when the monomer composition is left to stand over the period, as a rough standard.

The use of a method in which any of the sub steps A to D is used makes it possible to measure the orientation of the silver nanowire in the monomer composition on a real-time basis. In this case, the end of the standing step (that is, the start of the polymerization step) is not managed by time, and the fact that the silver nanowire has been oriented in the vertical direction, that is, in a perpendicular lengthwise direction to a desired extent can be used as an index. The expression "being oriented to a desired extent" may mean that, for example, the orientation degree is somewhere between the upper limit and the lower limit that are permitted in terms of the step management.

A method of polymerizing the monomer composition is not particularly limited. For example, a method in which convection or the like is less likely to occur during polymerization is preferable since the orientation of the silver nanowire is maintained. Examples of a preferable polymerization method include anion polymerization, cation polymerization, complex catalyst polymerization and the like, and photoinitiated radical polymerization by the use of light such as ultraviolet rays can be considered as a more preferable example.

The polymerized polymer to be obtained needs to be a polymer in which the orientation state of the silver nanowire is maintained after polymerization, but is not limited to a cured product of a resin or the like and may be a gel. The polymerized polymer to be obtained may be a hard substance or may be flexible to a certain extent. Examples of a monomer that is contained in the monomer composition include N,N-dimethylacrylamide, N,N'-isopropylacrylamide, acrylamide, N-vinylacetamide and the like, but the monomer is not limited only to these examples. Examples of a component other than the monomer in the monomer composition include a crosslinking agent such as N,N'-methylenebisacrylamide and the like, but the component is not limited only to these examples. Additionally, a dispersant and the like may be contained as necessary, but the component is not limited only to these examples. The amount of nanowire that is contained in the monomer composition can be arbitrarily selected and may be, for example, 500 mass ppm to 2000 mass ppm, but the amount is not limited only to this example.

The shape of the polymerized polymer or the orientation direction of the silver nanowire that is contained is not particularly limited. For example, in a case where the shape of the polymerized polymer is a sheet (also including a film or a plate), examples of the orientation direction of the silver nanowire that is contained include the in-plane direction, thickness direction and other directions of the sheet and the like. In a case where the sheet is a roll sheet, examples of the orientation direction thereof of the in-plane direction of the sheet include a winding direction, a winding axis direction and the like.

Among the sheets, a sheet in which the orientation is in the in-plane direction and the orientation degree is high can be preferably applied to, for example, uses such as a polarization filter. In addition, among the sheets, a sheet in which the orientation is in the thickness direction, the orientation degree is not that high, and silver nanowires are entangled can be preferably applied to, for example, uses such as an anisotropic conductive sheet.

### [Examples]

Hereinafter, the present invention will be more specifically described with examples and comparative examples, but the present invention is not limited only to the following examples.

### (Example 1)

A 0.1 mass% silver nanowire (average diameter: 28 nm) water dispersion liquid containing 8 mass% of N,N-dimethylacrylamide, 0.1 mass% of N,N'methylenebisacrylamide and 0.1 mass% of 2,2-diethoxyacetophenone was used as a monomer composition. This composition was loaded into a quartz cell (inner dimensions: 1 mm in length (thickness), 10 mm in width and 30 mm in height) with the bottom surface maintained horizontally by dropwise addition and left to stand.

Next, the orientation of the silver nanowire in the quartz cell was confirmed by a method of the sub step A. That is, a light box was disposed on the rear surface, that is, the back of the quartz cell in the thickness direction, and a polarization filter was disposed on the front surface side of the quartz cell. In addition, the quartz cell was observed through the polarization filter in the right and left directions at angles of 45°. Immediately after the start of the standing, no differences in light and dark were confirmed even when the polarization filter was rotated. However, as a result of continuous observation, light gradually became dark as time went by, when the polarization axis of the polarization filter was aligned to be perpendicular. This result was the same even when the quartz cell was observed in a direction that was different by 90° from the horizontal direction. Therefore, it was found that the silver nanowire was oriented in the vertical direction.

As a result, it was found that the silver nanowire in the monomer composition was oriented in the vertical direction (height direction), and, after approximately 10 minutes from the loading of the monomer composition into the quartz cell, no additional changes in the orientation were seen. Next, the monomer composition in the quartz cell was irradiated with ultraviolet rays for 10 minutes with a 250 W UV lamp (L10852 manufactured by Hamamatsu Photonics K.K.), thereby starting polymerization. As a result of observing an obtained gel (a polymerized polymer containing the silver nanowire), the orientation of the silver nanowire was maintained in the same direction even after the monomer composition turned into the gel.

In addition, it was found that, when the polarization axis of the polarization filter was perpendicular, light transmitted by the gel was rarely observed, and the obtained gel itself played a role of a polarization filter.

Regarding the obtained gel (the polymerized polymer containing the silver nanowire), the orientation of the silver nanowire was also confirmed by a different method.

A method of the sub step D was used to confirm the orientation of the silver nanowire by irradiating the gel with X-rays in the thickness direction of the gel. As a result, it was confirmed that the orientation function S was 0.20 and the silver nanowire was oriented in the vertical direction.

In addition, the gel was removed and cut in a direction that had been the horizontal direction at the time of producing the gel, and the cross section was observed with a confocal laser scanning biological microscope. As a result, the cross section of the nanowire was observed, and the orientation of the nanowire in the vertical direction was confirmed.

### (Example 2)

A 0.1 mass% silver nanowire (average diameter: 28 nm) water dispersion liquid containing 8 mass% of N,N-dimethylacrylamide, 0.1 mass% of N,N'methylenebisacrylamide and 0.1 mass% of 2,2-diethoxyacetophenone was used as a monomer composition. This composition was added dropwise into a quartz cell with the bottom surface (10 mm × 30 mm) maintained horizontally such that the depth of the composition became 1 mm and left to stand.

Next, the orientation of the silver nanowire in the quartz cell was confirmed by a method of the sub step A. That is, a light box was disposed below the lower portion of the quartz cell, and a polarization filter was disposed on the upper portion of the quartz cell. In addition, the monomer composition in the quartz cell was observed through the polarization filter from above at an angle of 45°. Immediately after the start of the standing, no differences in light and dark were confirmed even when the polarization filter was rotated. However, the monomer composition gradually became dark as time went by, when the polarization axis of the polarization filter was aligned to be perpendicular. This result was the same even when the quartz cell was observed from the horizontal direction in a direction that was different by 90°. Therefore, it was found that the silver nanowire was oriented in the vertical direction.

After 10 minutes had passed from the dropwise addition, no additional changes were seen in the observation. Next, the monomer composition in the quartz cell was irradiated with ultraviolet rays for 10 minutes with a 250 W UV lamp (L10852 manufactured by Hamamatsu Photonics K.K.), thereby performing polymerization and obtaining a gel (polymerized polymer).

As a result of observing the obtained gel (dimensions: approximately 10 mm in length, approximately 30 mm in width and approximately 1 mm in thickness) through the polarization filter in the same manner, the silver nanowire was oriented in the thickness direction of the gel.

Regarding the obtained gel (the polymerized polymer containing the silver nanowire), the orientation of the silver nanowire was confirmed by a different method.

A method of the sub step D was used to confirm the orientation of the silver nanowire by irradiating the gel with X-rays in the thickness direction of the gel. As a result, the orientation function S was 0.00, and the silver nanowire was observed to be not oriented in the in-plane direction. That is, it was considered that, if the silver nanowire was oriented, the silver nanowire was oriented in the thickness direction. In other words, the silver nanowire was confirmed to be oriented in the thickness direction.

In addition, the gel was cut, and a cross section of the gel in the thickness direction was observed with a confocal laser scanning biological microscope. As a result, the nanowire oriented in the thickness direction was observed. This fact showed the orientation of the nanowire in the thickness direction (vertical orientation).

### (Example 3)

An experiment and observation were performed in the same manner as in Example 1 except that a method of the sub step C was used instead of the method of the sub step A for the confirmation of the orientation of the silver nanowire in the quartz cell. As a result, the same results as in Example 1 were obtained.

Specifically, the method of the sub step C used was performed as described below.

First, a light box was installed on the rear surface of the quartz cell containing the monomer composition in the thickness direction. Next, one polarization filter was installed between the light box and the quartz cell perpendicularly to an optical axis (thickness direction), and the other polarization filter was disposed in front of the quartz cell perpendicularly to the optical axis. These two polarization filters can be rotated around the optical axis as an axis and are maintained so as to form a crossed Nicols shape at all times.

Immediately after the start of the standing, the monomer composition was generally dark, and no differences in light and dark were confirmed even when the two polarization filters were rotated. Furthermore, a sensitive color plate was inserted between one polarization filter and the quartz cell such that the slow axis thereof formed an angle of 45° with the polarization axis of the one polarization filter, and the two polarization filters and the sensitive color plate were rotated as a unit around the optical axis as an axis. However, no changes in color were confirmed even after the rotation. Here, the sensitive color plate was removed.

However, as a result of continuously observing the monomer composition every certain time, it was observed that, as time went by, the monomer composition gradually became dark when the polarization axis of the other polarization filter that was disposed in a crossed Nicols shape was aligned in the horizontal direction and gradually became bright when the polarization axis was inclined at 45° from the horizontal direction. Such results indicate that the silver nanowire in the silver nanowire dispersion liquid was oriented horizontally or perpendicularly as time went by.

Next, the sensitive color plate was inserted again in the same manner, and the two polarization filters and the sensitive color plate were rotated as a unit around the optical axis as an axis. As a result, a yellow-green interference color was seen when the slow axis of the sensitive color plate was aligned in the horizontal direction. Therefore, it was clarified that the silver nanowire was oriented in the vertical direction.

From the above-described results, it was found that the silver nanowire in the monomer composition was oriented in the vertical direction (height direction). After approximately 10 minutes from the loading of the monomer composition into the quartz cell, no additional changes in the orientation were seen. After that, polymerization was performed by the same method as in Example 1, and a gel was obtained.

Regarding the obtained gel (the polymerized polymer containing the silver nanowire), the orientation of the silver nanowire was confirmed in the same manner. As a result, the orientation of the silver nanowire in the same direction as that before the polymerization was confirmed. In addition, as a result of removing the sensitive color plate and observing the gel, the gel became dark when the polarization axis of the one polarization filter that was disposed in a crossed Nicols shape was aligned to be horizontal, and the gel became bright when the polarization axis was inclined at 45° from the horizontal direction. From this fact, it was also confirmed that the obtained gel had a function of a phase difference plate.

### (Example 4)

An actual sensation and observation were performed in the same manner as in Example 2 except that the method of the sub step C was used instead of the method of the sub step A for the confirmation of the orientation of the silver nanowire in the quartz cell. As a result, the same results as in Example 2 were obtained.

Specifically, the method of the sub step C used was performed as described below.

First, a light box was installed below the lower portion of the quartz cell. One polarization filter was disposed between the light box and the quartz cell, and the other polarization filter was disposed on the quartz cell. These two polarization filters are disposed perpendicularly to an optical axis, can be rotated around the optical axis as an axis and are maintained so as to form a crossed Nicols shape at all times.

As a result, in observation with the optical axis aligned to be vertical, the monomer composition remained dark at all angles even immediately after the start of the standing, even after 10 minutes had passed from the standing, and even after the polarization filters were rotated. This fact shows that the silver nanowire did not have any orientations in the in-plane direction (horizontal direction). On the other hand, when the monomer composition was observed with the optical axis inclined at 45° from the vertical direction, the monomer composition was generally dark, and no differences in light and dark were confirmed immediately after the start of the standing even when the polarization filters were rotated. However, as time went by, the monomer composition gradually became dark when the polarization axis of the other polarization filter that was disposed in a crossed Nicols shape was aligned in the horizontal direction and gradually became bright when the polarization axis was inclined at 45° from the horizontal direction. A sensitive color plate was inserted between the quartz cell and one polarization filter such that the slow axis formed an angle of 45° with the polarization axis of the one polarization filter, and the two polarization filters and the sensitive color plate were rotated as a unit around the optical axis as an axis. As a result, a yellow-green interference color was seen when the slow axis of the sensitive color plate was aligned in the horizontal direction and the polarization axes of the polarization filters were inclined at 45° from the horizontal direction. Therefore, it was observed that the silver nanowire was oriented in the film thickness direction, that is, the vertical direction.

After 10 minutes had passed from the start of the standing, no additional changes in color were seen in the observation.

### [Industrial Applicability]

The present invention provides a production method of a polymerized polymer containing a silver nanowire in which the orientation direction of the silver nanowire can be freely controlled. The present invention also makes it possible to improve the production efficiency.

A polymerized polymer that is obtained by the method of the present invention can be used as an optical material such as polarization filters, phase difference plates and the like, an electronic material such as anisotropic conductive sheets and the like, and the like.

### [Reference Signs List]

1 Direction of light from optical source (optical axis direction)
2 Measurement sample
3 Polarization filter
4 Polarization filter
5 Sensitive color plate

## Claims

1. A production method of a polymerized polymer containing a silver nanowire, comprising:
a preparation step of preparing a monomer composition containing the silver nanowire;
a polymerization step of performing polymerization of the monomer composition containing the silver nanowire; and
a standing step of leaving the monomer composition to stand, which is performed between the preparation step and the polymerization step,
wherein a start of the polymerization step is determined in the standing step based on an orientation state in a vertical direction of the silver nanowire in the monomer composition as an index.

2. The production method of a polymerized polymer according to claim 1,
wherein the polymerization step starts after the silver nanowire in the monomer composition is oriented in the vertical direction in the standing step.

3. The production method of a polymerized polymer according to Claim 1 or 2,
wherein the polymerized polymer has a sheet shape.

4. The production method of a polymerized polymer according to Claim 1 or 2,
wherein the polymerized polymer is a gel.

5. The production method of a polymerized polymer according to Claim 1 or 2,
wherein the standing step includes a sub step of confirming an orientation of the silver nanowire.

6. The production method of a polymerized polymer according to Claim 5,
wherein the sub step is a step in which the monomer composition is disposed between an optical source and a polarization filter, and the polarization filter is rotated around an optical axis generated from the optical source as an axis to perform observation.

7. The production method of a polymerized polymer according to Claim 5,
wherein the sub step is a step in which two polarization filters that are disposed in a crossed Nicols shape at all times are provided in front of an optical source, the monomer composition is disposed between the two polarization filters, and the polarization filters are rotated around an optical axis generated from the optical source as an axis, to perform observation.

8. The production method of a polymerized polymer according to claim 7,
wherein the sub step is a step in which a sensitive color plate is disposed between any one of the two polarization filters and the monomer composition.
